# EUROPÄISCHE PATENTSCHRIFT

(11) **EP 1 541 465 B1**
(45) Veröffentlichungstag und Bekanntmachung des Hinweises auf die Patenterteilung: **18.07.2007**
(21) Anmeldenummer: 03028070.5
(22) Anmeldetag: 09.12.2003
(51) Int. Cl.: B64C 37/00, B60F 5/02, B64C 3/56, B62K 5/00, B62K 17/00

(54) **Ultraleicht-Fluggerät mit der Möglichkeit der Fortbewegung in der Luft sowie auf der Strasse**
Ultralight aircraft capable of travelling in the air and on the ground
Avion ultraléger capable de se deplacer dans l'air et sur le sol

(43) Veröffentlichungstag der Anmeldung: 15.06.2005
(73) Patentinhaber: Hegger, Christof, 32547 Bad Oeynhausen (DE)
(72) Erfinder: Hegger, Christof, 32547 Bad Oeynhausen (DE)

(56) Entgegenhaltungen:
- DE-A- 2 357 628
- DE-A- 2 456 919
- DE-A- 19 907 791
- FR-A- 2 774 355
- US-A- 4 657 207
- US-A- 5 078 335
- US-B1- 6 286 619
- US-B1- 6 547 027

## Beschreibung

### Technisches Gebiet und Stand der Technik:

Der Stand der Technik sind gewichtsgesteuerte Ultraleicht Fluggeräte der Bauart "Trike". Diese Ultraleicht- Fluggeräte bestehen aus einem Rohrrahmen mit einem in der Regel kleinen mit den Füßen lenkbaren Vorderrad und an zwei Auslegern befestigte Hinterräder. So sind in der Regel drei Räder montiert, woraus sich die Bezeichnung "Trike" ableiten läßt. Die Sitzplatzanordnung ist meist hintereinander. Es gibt aber auch Ausführungen in denen nebeneinander gesessen werden kann. Was alle zugelassenen Ultraleicht- Fluggeräte gemeinsam haben, ist ein hinter den Sitzplätzen angeordneter Motor, an dem ausschließlich ein Propeller angetrieben wird. Der erforderliche Auftrieb wird durch einen bei gewichtsgesteuerten Ultraleicht- Fluggeräten üblichen deltaförmigen Flügel erreicht. Dieser ist vom Piloten durch ein Gestell so in der Lage zu verstellen, daß alle Flugmanöver (Steigen, Kurvenflug und Sinken) möglich sind.
Ideen ein Ultraleicht- Fluggerät mit einem Motor in der Luft sowie auch auf der Straße einzusetzen sind nicht neu, allerdings wurde dieses noch nicht erfolgreich umgesetzt. Gescheitert sind solche Projekte an der nicht erteilten Luftfahrt- oder Straßenzulassung.

Aus US 5 078 335 A bzw. FR 2 774 355 A ist es bekannt, ein Motorrad mit einem Zusatzrahmen an welchem ein Flügel befestigt werden kann sowie mit einem Druckpropeller zu versehen. In US-A-5 078 335 wird der Propeller vom Motorradmotor über eine Kupplung und einen Antriebsstrang und im FR-A- 2 774 355 von Antriebsrollen am Hinterrad angetrieben.

US 6 547 027 A und US 6 286 619 A offenbaren Fahrzeuge vom Typ "All Terrain Vehicle" (ATV) mit Rahmen, Motor, vier Räder und einem Lenker.

Teleskop-Flügel sind beispielsweise aus DE 23 57 628 A (für ein Motorrad), DE 199 07 791 A (für einen PkW) oder DE 24 56 919 bekannt.

### Zu lösende technische Aufgabe:

### I.

Gegenstand der Erfindung ist ein Ultraleicht- Fluggerät, das eine Zulassung als Ultraleicht-Fluggerät, sowie eine Straßenzulassung erhält. Beide Zulassungen erfüllen die üblichen nationalen Bestimmungen des Landes, in dem das Ultraleicht- Fluggerät zugelassen wird.

Daraus ergeben sich folgende vorteilhafte Möglichkeiten für den Benutzer:
Problem: Wetterverschlechterungen, die einen Weiterflug nicht ermöglichen.
Lösung: Auf der öffentlichen Straße die Reise mit dem vorgestellten Ultraleicht- Fluggerät fortsetzen.
Problem: Unvorhersehbare Verzögerungen der Zeitplanung, die ein Einsetzen der Dunkelheit zur Folge hat, bei der aus gesetzlichen Gründen der Flug nicht fortgesetzt werden kann oder erst gar nicht gestartet werden kann.
Lösung: Auf der öffentlichen Straße die Reise mit dem vorgestellten Ultraleicht- Fluggerät antreten oder fortsetzen.
Problem: Das Reiseziel hat keinen geeigneten Flughafen und somit ist keine Landemöglichkeit gegeben.
Lösung: Den nächstmöglichen Flugplatz ansteuern und das Ziel mit dem vorgestellten Ultraleicht- Fluggerät auf öffentlichen Straßen anfahren.
Problem: Die Windgeschwindigkeiten gegen die Flugrichtung sind wetterbedingt so stark, dass eine sinnvolle Fortbewegung nicht möglich ist.
Lösung: Auf der öffentlichen Straße die Reise mit dem vorgestellten Ultraleicht- Fluggerät fortsetzen.
Problem: Eine Unterstellmöglichkeit am Flugplatz ist nicht vorhanden, so daß ein Betreiben eines Ultraleicht- Fluggerätes nicht möglich ist, da diese nicht wetterbeständig sind.
Lösung: Das vorgestellte Ultraleicht- Fluggerät zu einer geeigneten Unterstellmöglichkeit fahren.
Problem: Das Aufsuchen einer Werkstatt für Wartungsarbeiten oder Reparaturen ist mit einem herkömmlichen Ultraleicht- Fluggerät nicht möglich.
Lösung: Das vorgestellte Ultraleicht- Fluggerät zu einer geeigneten Werkstatt oder Wartungsmöglichkeit fahren.
Problem: Eine Kombinationsreise mit fliegerischen Teilabschnitten und Fahrabschnitten ist in einem herkömmlichen Ultraleicht- Fluggerät nicht ohne Leihfahrzeug möglich. Lösung: Mit dem vorgestellten Ultraleich- Fluggerät ist diese Kombination möglich, da alle notwendigen Teile zum Fliegen und Fahren immer am Fluggerät vorhanden sind. Dadurch ergibt sich eine Reisemöglichkeit aus Fliegen und Fahren in eine Himmelsrichtung ohne Rundreisecharakter.
Problem: Das herkömmliche Ultraleicht- Fluggerät ist außer zur Reise und der Freizeitgestaltung "Fliegen" recht nutzlos.
Lösung: Das vorgestellte Ultraleicht- Fluggerät ist ähnlich einer Motorradnutzung als Fortbewegungsmittel zu verwenden.

### II.

Darüber hinaus ist es noch Aufgabe, besonders schwierige Einsätze zu ermöglichen. Diese bestehen darin überall sicher landen zu können, auch wenn das Landegelände für Flächenfluggeräte zunächst ungeeignet erscheint.

### Feuerwehr:

Eine Nutzung für die Waldbrandbekämpfung ist möglich. (Eine Person plus 80 Kg Ausrüstung können eingesetzt werden) Arbeitsweise: Ein Brand kann aus der Luft geortet und beobachtet werden. Auf einer Lichtung oder Straße/Feldweg/Wiese, nahe des Brandherdes kann gelandet werden. Mit dem geländegängigen Ultraleicht- Fluggerät ist auch im schweren Gelände eine Mobilität möglich, um den Brand schnell zu erreichen. So besteht die Möglichkeit den Brand mit wenigen Mitteln früh einzudämmen. Es können Geräte zur Schaffung von Schneisen mitgeführt werden, die zur Unterbrechung des Ausbreitungsweges des Feuers dienen. (Kettensäge, Spaten, Wasserpumpen usw.)

### Forst und Naturschutzbehörden:

Zur Überwachung von Forstgebieten / Nationalparks (Baum und Tierbestand) kann das vorgestellte Ultraleicht- Fluggerät eingesetzt werden. Zum Erreichen von unwegsamen Stellen sind die erwähnten Flug- und Landeeigenschaften nutzbar.

### Rettungseinsätze:

Ärztliche Rettungsversorgung und Bergung von Personen und Geräten aus unwegsamen Gelände (Wüste, Waldgebiete, Gebirge, Arktis u.s.w.)

### Darstellung der Erfindung:

Die Erfindung besteht aus einem Ultraleicht-Fluggerät nach Anspruch 1. Vorteilhafte Weiterbildungen sind in den abhängigen Ansprüchen 2-5 definiert.

### Vorteilhafte Wirkungen der Erfindung:

Eine Neuheit ist,
dass sich das Ultraleicht- Fluggerät mit allen zum Flug notwendigen Teilen, sowie auch ein bis zwei Personen, auch auf der öffentlichen Straße, sowie auch im schweren Gelände durch angetriebene Bereifung bewegen läßt.

Eine Neuheit ist,
dass beim Startvorgang bei Pistenbedingungen, wie loser Treibsand, Schlamm oder nassem Ackerboden, auf dem rotierenden Propeller bewußt verzichtet werden kann. Das Problem ist, dass bei allen Luftfahrzeugen, die einen Druckpropeller am Heck des Luftfahrzeuges platziert haben, sehr häufig Propellerschäden auftreten. Von den Rädern hochgewirbelter Boden und Staub, wird vom Propeller angesaugt und zerschlagen. Ein Stein reicht aus, um dem rotierenden Propeller einen Totalschaden zuzufügen. Mit Hilfe der angetriebenen Heckbereifung kann auf Abhebgeschwindigkeit beschleunigt werden, ohne Propellerrotation. Durch eine Vergrößerung des Anstellwinkels des Teleskop Flügels wird das Ultraleicht- Fluggerät in der Lage sein, ohne Propellemutzung abzuheben. Nach Abheben werden die Räder durch Betätigung der Bremsen zum Stillstand gebracht und das Aufwirbeln von Materie gestoppt. Nun wird sich keine Materie mehr im Ansaugbereich des Propellers befinden und der Propeller kann mit Hilfe der Trocken-Mehrscheibenkupplung in sehr kurzer Zeit unter Volllast des Motors zum Rotieren gebracht werden. Eine weitere Stärke der neuen Erfindung ist der Start im schweren Gelände. Auf stark bremsenden Untergründen ist ein Start nur mit Propellervortrieb ausgeschlossen, da die Kraft nicht ausreicht um das Luftfahrzeug aus dem Stand zu beschleunigen. Sind die üblichen kleinen Räder im weichen Boden eingesackt, ist das Anfahren nicht möglich. Das Beschleunigen auf Abhebgeschwindigkeit ist nur durch einen Kraftschluß mit Traktion über die Bereifung möglich. Bedingt durch das optimale Beschleunigungsverhalten ergibt sich zusätzlich auf allen Untergründen eine Startstrecke die ungewöhnlich kurz ist. Auf ausreichend befestigten Pistenuntergründen wie Asphalt oder Gras kann auch konventionell nur mit Propellerkraft gestartet werden. Wenn die Piste sehr kurz ist, kann auch mit beiden Kraftübertragungen (Heckantrieb und Propellerantrieb) gleichzeitig im Eingriff gestartet werden.

Eine Neuheit ist,
dass die Antriebskraft der Bereifung durch den Flugmotor im Anflug auf die Piste wahlweise zuzuschalten ist. Dadurch ist eine Erkundung der Pistenverhältnisse bei unbekannten Gegebenheiten des Geländes vor der eigentlichen Landung durchführbar. Das Ultraleicht-Fluggerät kann so aufsetzen und ein Abfahren der Piste ohne einen Geschwindigkeitsverlust auf stark bremsendem Untergrund wird möglich. Das Ultraleicht- Fluggerät ist mit genügend Geschwindigkeit jederzeit in der Lage, wieder vom Boden abzuheben, falls sich die Piste als schlecht, zu gefährlich, zu kurz erweist, oder unerwartet ein Hindernis vom Piloten erkannt wird. Ist die erforderliche Landestrecke mit Abhebgeschwindigkeit abgefahren, und die Piste für ausreichend gut befunden, wird durchgestartet und bei einem zweiten Landeanflug eine sichere Landung durchgeführt.

Eine Neuheit ist
ein Fahrwerk mit exzellenten Geländefahreigenschaften in ein Ultraleicht Fluggerät zu integrieren.

Dazu gehören:
a) vier gebremste Räder, die den Geschwindigkeitsabbau und die Kurvenfahreigenschaften bei der Landung verbessern.
b) breite und im Durchmesser ungewöhnlich große Bereifungen, die eine Landung auf Treibsand und stark bremsenden Untergründen ermöglichen, ohne die Tendenz des Überschlagens.
c) eine robuste Fahrwerkkonstruktion mit großen gedämpften Federwegen, die sehr harte Landungen und das Durchfahren von Schlaglöchern ermöglichen, ohne Beschädigung des Ultraleich- Fluggerätes.

Eine Neuheit ist
der abrüstbare Teleskopflügel, der nach der Landung mit wenigen Handgriffen kompakt zusammengeschoben werden kann. So wird ein Fahren auf öffentlichen Straßen ermöglicht.

### Übersicht der Abbildungen

Abbildung 1
   zeigt die Gesamtansicht des Ultraleicht- Fluggerätes, einsatzbereit für den Betrieb auf der Straße.
Abbildung 2
   zeigt die Gesamtansicht des Ultraleicht- Fluggerätes im Umbaustadium zum flugfähigen Luftfahrzeug.
Abbildung 3
   zeigt das flugfähige Ultraleicht- Fluggerät in der Gesamtansicht von vorne mit bespannten Flügeln.
Abbildung 4
   zeigt die Ansicht auf die beiden Querlenker und die Vorderradlenkung.
Abbildung 5
   zeigt die Ansicht auf das Heck des Ultaleicht- Fluggerätes.
Abbildung 6
   zeigt das mit den Füßen steuerbare Lenksystem.
Abbildung 7
   zeigt die Antriebstechnik des Propellers.
Abbildung 8
   Gleichlaufwelle
Abbildung 9
   Kreuzgelenkwelle
Abbildung 10
   zeigt des flugfähigen Ultraleicht- Fluggerät mit der Antriebseinheit.
Abbildung 11
   Riementrieb
Abbildung 12
   Zahnriemen
Abbildung 13
   Verbundkeilriemen
Abbildung 14
   Keilrippenriemen

### Beschreibung der Erfindung anhand der Abbildungen:

### (Abbildung 1)

Der Rahmen 11 des Ultraleicht- Fluggerätes umschließt den Motor 12 mit dem Getriebe 13.

### (Abbildung 4)

An dem vorderen Teil des Rahmens 11 befindet sich die Vorderradaufhängung. Die statische Bestimmung der Radstellung eines Vorderrades 14 wird durch eine Dreipunkt- Anbindung erreicht.
Die Dreipunkt- Anbindung besteht aus einem oberen Querlenker 15 und einem unteren Querlenker 16 und einer Zug-/Drucklenkstange 17 die an einem kleinen Ausleger 18 mit der Lenksäule 19 des Lenkers 20 verbunden ist. Das Vorderrad 14 ist an den Enden der Querlenker 15 und 16 durch drehbare Gelenkköpfe 21 gelagert. Am Ende der Zug-/ Drucklenkstange 17 befindet sich ein Gelenkkopf 21 am Rad. So ist das Rad in der Lage auf Zug oder Druck der Zug-/ Drucklenkstange 17 den Radeinschlag zu verändern. Ein Federelement 23 mit Stoßdämpfer 24 ist für eine Beruhigung des Fahrwerkes dringend erforderlich. An jedem Vorderrad 14 befindet sich eine Bremsscheibe und eine hydraulisch betätigte Scheibenbremszange, die über die Handbremse 25 am Lenker 20 betätigt wird. Für ein Ultraleicht- Fluggerät ist die vordere Radaufhängung zwar recht aufwendig, um aber den zu erwartenden harten Einsatz technisch zu bewältigen ist diese dringend erforderlich und gehört zum Gesamtkonzept.
Das gleiche gilt für den stabilen hinteren Teil des Fahrwerkes.

### Abbildung 5

Das Fahrwerk der Hinterräder besteht aus einer Hinterradschwinge 26 die im Schwingenlager 27 drehbar gelagert ist und durch ein Federelement 28 und einen Stoßdämpfer 29 beruhigt wird. Dieses ermöglicht harte Landungen auf unebenem Gelände. Eine Bremsscheibe 30 und eine hydraulisch betätigte Bremszange 31, die durch die Fußbremse 32 betätigt wird, gewährt gute Bremsleistungen. Durch eine stabile Antriebswelle Hinterräder 33 sind beide Antriebsräder 113 miteinander verbunden. An der Antriebswelle Hinterräder 33 befindet sich ein fest verbundenes Kettenrad 34 auf dem eine Antriebskette 35 aufliegt.

### Abbildung 1

Diese Antriebskette 35 liegt auf dem Kettenritzel 36 des Getriebeabganges auf Das Geriebe 13 verfügt über mehrere Gangstufen und eine Mehrscheibenkupplung. Diese wird zum Dosieren der Motorkraft beim Anfahren und zur Trennung der Antriebskraft bei Stand- und Gangwechsel benötigt. Der dazugehörige Kupplungshebel 37 befindet sich am linken Lenkerende. Die Füße des Piloten ruhen beim Fahrbetrieb auf den Fußrasten 38. An der linken Seite des Motors befindet sich der Gangwahlfußhebel 39 des mechanischen Getriebes. Dieser ist mit dem linken Fuß zu betätigen.

### Abbildung 4

Der Kraftstofftank 40 befindet sich zwischen den Beinen des Piloten und über dem Motor. Das ermöglicht einen kurzen Kraftstofffluß zum Vergaser. Eine Benzinpumpe wird deshalb nicht benötigt. Der Pilot ist jederzeit in der Lage den Benzinhahn 41 zu betätigen. Durch das Entfernen des Tankdeckels kann der Pilot sich über den Kraftstoffvorrat informieren.
Die Sitzbank 42 liegt auf dem hinteren Teil des Rahmen 11 auf, und ermöglicht die Mitnahme von einem Piloten und einem Passagier. Über ein an dem Zellenrahmen befestigtes Gurtsystem, das nicht zeichnerisch dargestellt ist, kann sich der Pilot sowie der Passagier anschnallen. Das Abgas des Motors wird über die Auspuffanlage 43 mit dem Schalldämpfer 44 zum Heck des Ultraleicht- Fluggerätes geführt.
Der Motor 12 kann auch wassergekühlt sein, was einen Kühler 45 erforderlich macht. Es kann sich auch um einen Mehrzylindermotor handeln. Das Getriebe kann auch ein Automatikgetriebe sein. Ein elektrischer Anlasser ermöglicht den Start des Motors. Eine Batterie speichert die dazu erforderliche Energie.

### Beschreibung der zum Flugbetrieb benötigten Komponenten:

### Abbildung 5

Für den Startvorgang werden alle Bedienungselemente am Lenker 20 benötigt. Dazu zählen der Gasgriff 46, Handbremshebel 25 'Kupplungshebel 37, Startknopf des Motors, Notausschalter des Motors und der Schalter für den Landescheinwerfer.
Beide Hände werden für die Bedienung des Teleskop- Flügel 62 bei Start, Flug und Landung benötigt.
Um alle Bedienungselemente nutzen zu können wird der Lenker 20 mit all seinen Bedienungselementen von der Lenksäule 19, mit Hilfe der Schnellspannkupplung Lenker 47 von der Schnellspannkupplung Lenksäule 48 entkuppelt und an die Schnellspannkupplung Flügel 50 angekuppelt. Die Hände des Piloten umschließen die Lenkerenden und ermöglichen so die benötigten Steuerimpulse für die Stellung des Flügels beim Fliegen sowie die Steuerimpulse für Motor, Getriebe und Bremse weiter zu geben.

### Abbildung 2

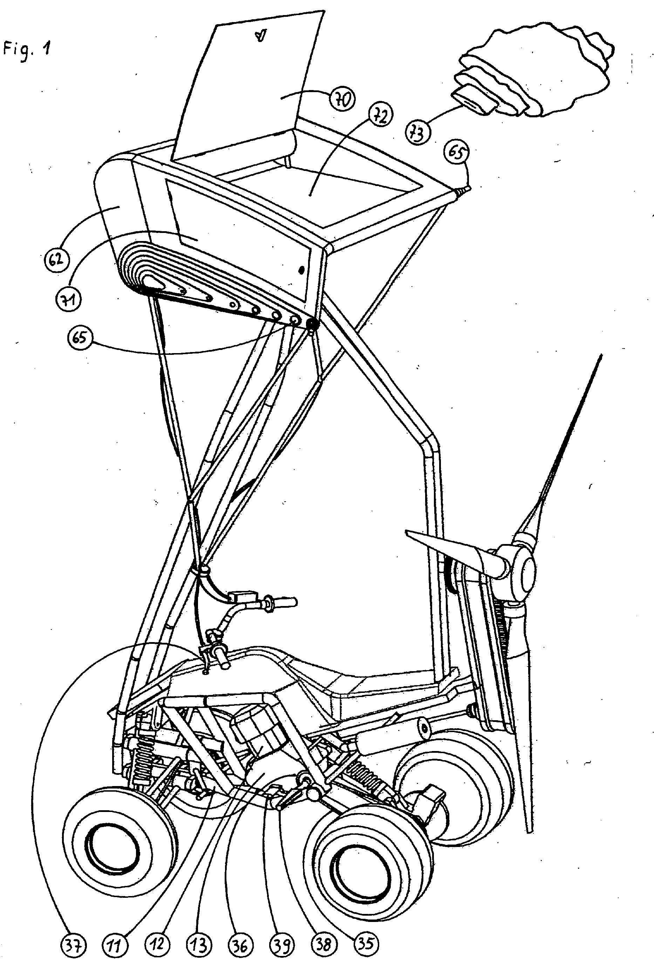

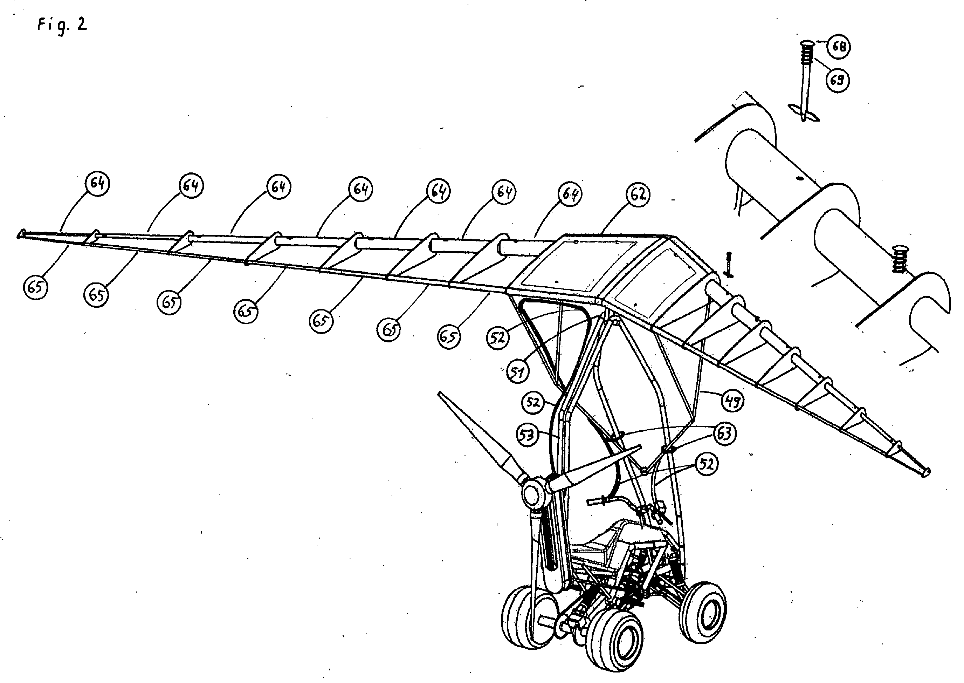

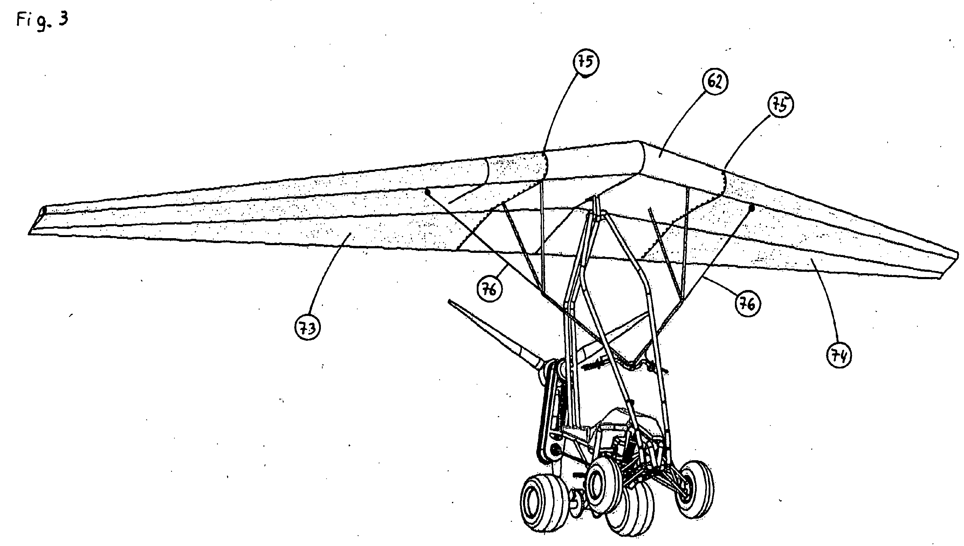

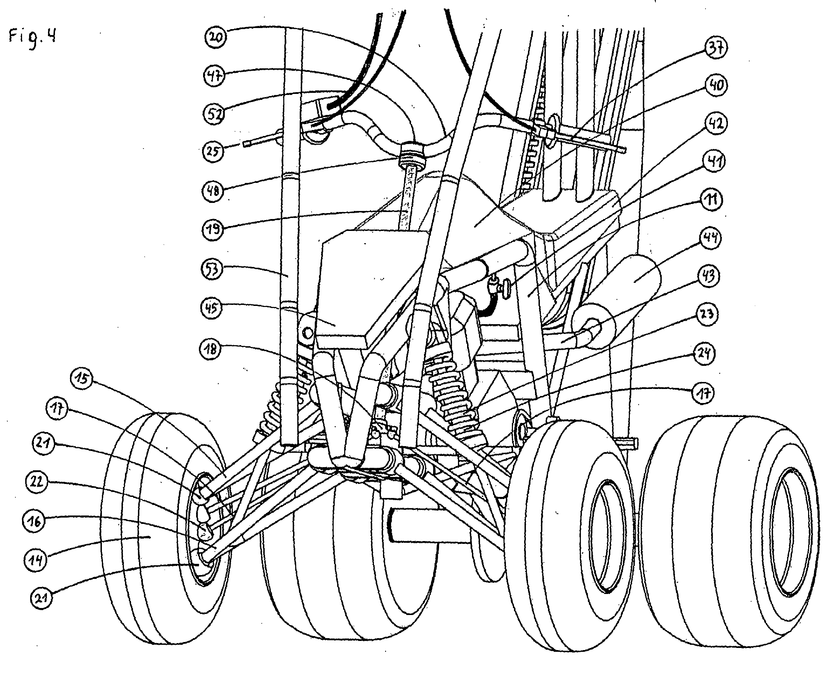

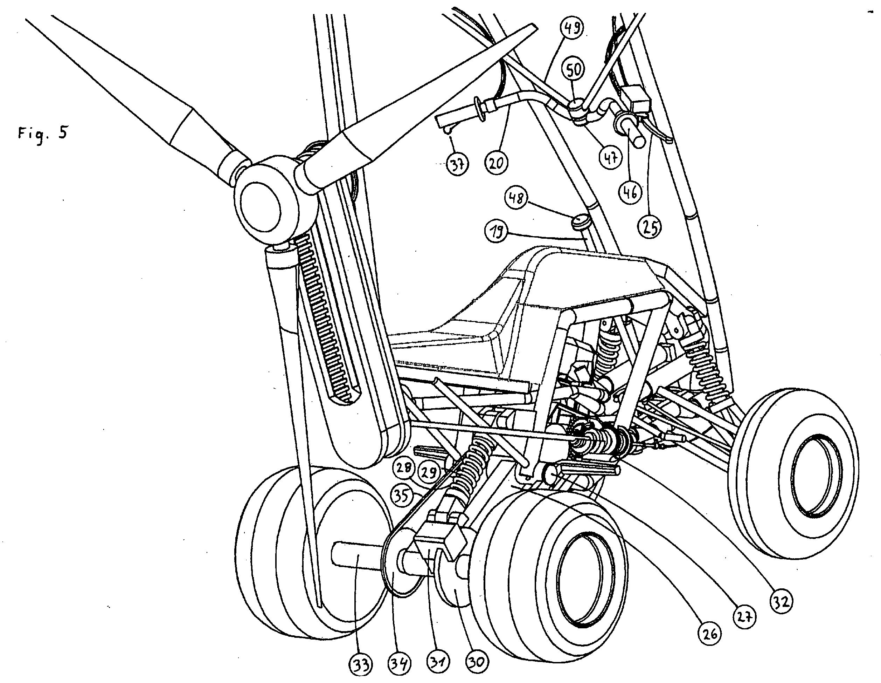

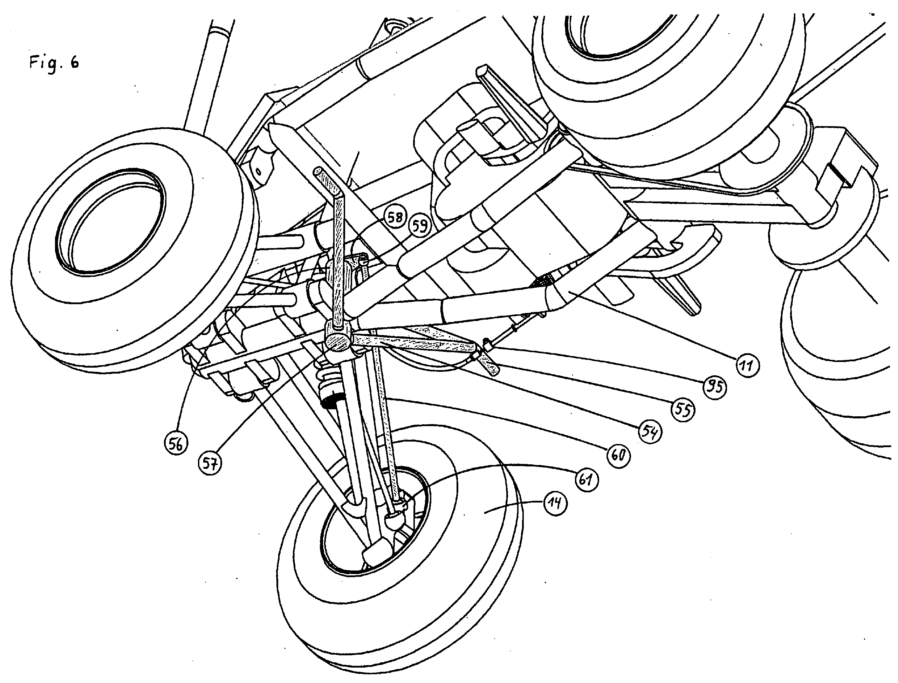

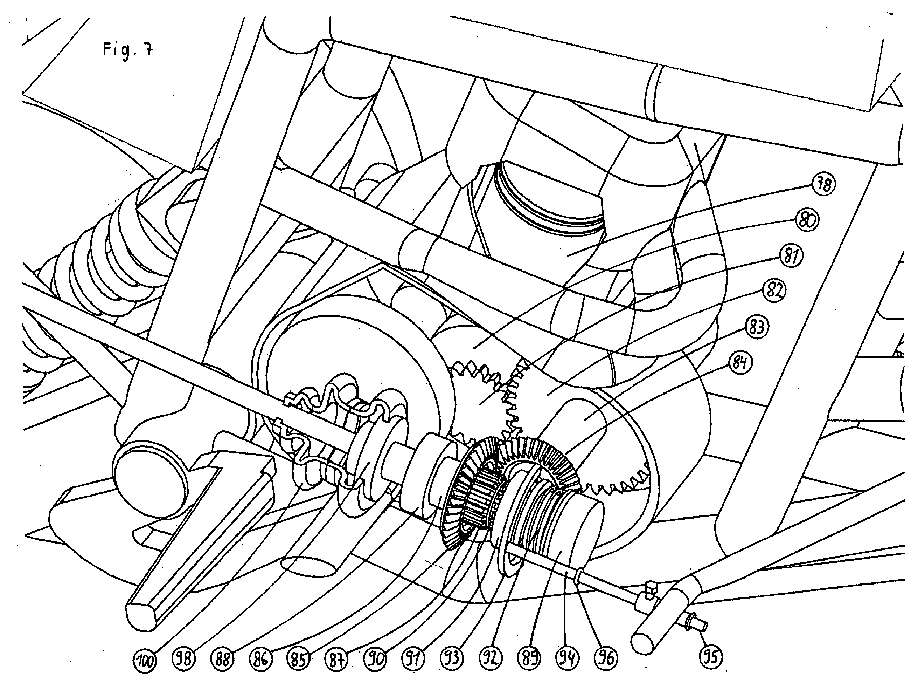

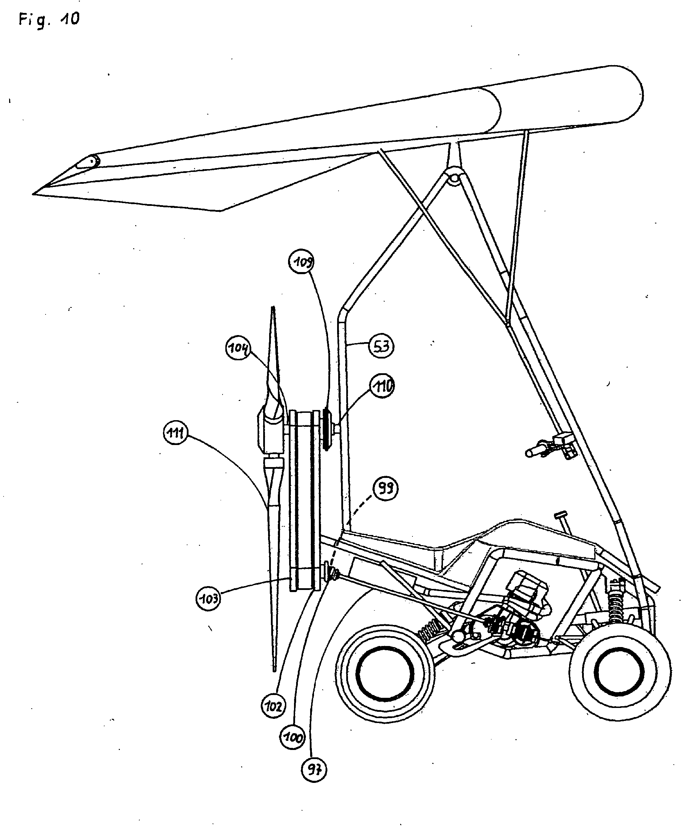

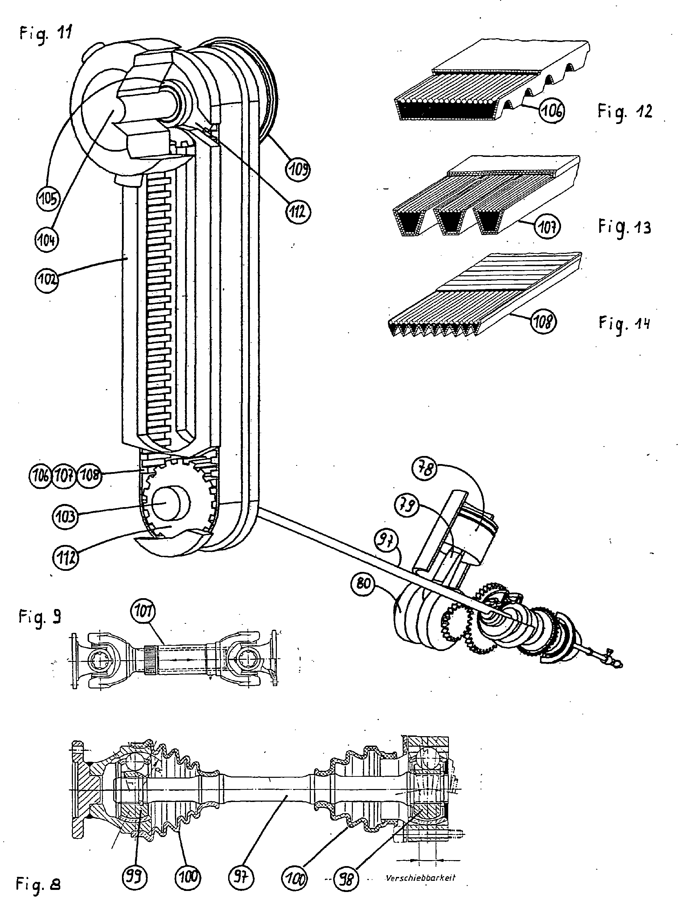

Die Kabel, die hydraulische Bremsleitung und die Bautenzüge 52 sind von der Lenkermitte nach oben zum Steuergestell des Teleskop Flügels 49 verlegt. Über die zentrale Hauptanbindung 51 des Flügels führen die Leitungen über den Zellenrahmen 53 an die entsprechenden Steuereinheiten. So ist beim Fahren sowie Fliegen (siehe Abbildung 5) keine Behinderung durch die Kabel, die hydraulische Bremsleitung und die Bautenzüge 52 zu erwarten.

### Abbildung 5

Das Ultraleicht- Fluggerät ist, nach dem der Lenker 20 von der Lenksäule 19 entkuppelt und an das Steuergestell des Teleskop Flügels 49 angekuppelt wurde, nicht mehr zu lenken. Deshalb befindet sich eine Fußlenkung am Rahmen 11, die auch beim normalen Fahrbetrieb am Ultraleicht- Fluggerät erhalten bleibt.

### Abbildung 6

Die Fußlenkung besteht aus einem Rohrausleger 54, an dem sich an jedem Ende eine Fußauflage 55 befindet. In der Mitte ist der Rohrausleger im Lagerbock 56 drehbar gelagert. An der Drehwelle Rohrausleger 57 ist an einer Auslegeplatte Fußlenkung 58 ein Kugelgelenkkopf 59 befestigt. Von diesem Kugelgelenkkopf 59 führt eine Zug-/ Druckstange 60 zum rechten Vorderrad 14, und ist dort aussermittig mit dem Gelenkkopf 61 am Rad befestigt. Das Rad 14 reagiert auf Druck auf die Fußauflage 55 des Rohrauslegers 54 mit einem Radausschlag.

### Abbildung 4

Über das für die Lenkerlenkung vorhandene Lenksystem 22/17/18/17/22 wird der Radausschlag auf das gegenüberliegende Rad übertragen. Das Ultraleicht- Fluggerät läßt sich so bei Start und Landung mit den Füßen lenken.

### Abbildung 2

Der Teleskop- Flügel 62 ist mit dem Steuergestell des Teleskop- Flügel 49 fest verbunden. Der Teleskop-Flügel 62 ist in einer zentralen Hauptanbindung 51 beweglich an dem Zellenrahmen 53 befestigt. Das Steuergestell des Teleskop- Flügels 49 ist am Zellenrahmen 53 mit den Schnellspannern Flügelfixierung 63 rechts und links befestigt. Damit steht das Ultraleicht- Fluggerät stabil und der Teleskop- Flügel 62 ist fixiert. Der Pilot kann jetzt aus dem Teleskop- Flügel 62 die sieben Flügelrohrsegmente 64 ausziehen. So steigt die Spannweite vom Teleskop- Flügel 62 von etwa 1,8 Meter auf 10 Meter an. Die Flügelrohrsegmente 64 besitzen Bohrungen im Teleskoprohr 67, die beim ausgezogenen Flügel fluchten. Durch diese werden Federspannbolzen 68 von oben eingeführt. Durch den Kippmechanismus und die Feder 69 sind die Bolzen gesichert.

### Abbildung 1

Jetzt kann der Pilot das hintere Flügelkantenrohr 65 ausziehen und durch die Bohrungen der Flügelrohrsegmente 66 durchführen. Durch das Öffnen der Flügelstauraumklappe rechts 70 wird der Stauraum 72 zugänglich. In diesem befindet sich die Bespannung Flügel rechts 73, die der Pilot nun herausnehmen kann. Auf der linken Seite des Teleskop- Flügels 62 befindet sich eine zweite Flügelstauraumklappe links 71 mit einem Stauraum für die Bespannung Flügel links 74. Die Flügelstauraumklappen 70 und 71 können auch an der Flügelunterseite angeordnet sein, was den Zugang von unten ermöglicht. Es gibt dann keine Dichtprobleme mit Regenwasser im Bezug auf den Stauraum 72 und zusätzlich ist das Fach für kleingewachsene Piloten besser zu erreichen.

### Abbildung 3

Ist der Teleskop- Flügel 62 als Rohrgestell ausgefahren, wird für jede Flügelseite die Bespannung Flügel rechts 73 und die Bespannung Flügel links 74 über die Flügelenden aufgezogen. Die Flügelbespannung 73 und Flügelbespannung 74 wird jeweils durch einen Reißverschluß 75 mit dem Teleskop- Flügel 62 verbunden. Nun werden die Steuergestell- Flügel- Teleskoprohre 76 ausgezogen und am ausgezogenen Teleskop- Flügel 62 durch einen Bolzen befestigt. Hierdurch entsteht eine bewährte Dreiecksverbindung, die dem Flügel die nötige Stabilität bringt.

### Abbildung 1

Dadurch, dass der Teleskop- Flügel 62 beim Fahrbetrieb auf dem Zellenrahmen 53 befestigt bleibt, ist eine Vorraussetzung für den schnellen Umbau vom Fahr- auf Flugbetrieb gegeben.

### Abbildung 11

Der Kolben 78 treibt über ein Pleul die Kurbelwelle 80 an.

### Abbildung 7

Das Zahnrad Kurbelwelle 81 greift in ein etwa mit doppelt so viel Zahnflanken ausgelegtes größeres Zahnrad Untersetzung 82, das sich auf der Welle 83 befindet. Dadurch reduziert sich die Drehzahl von der hochdrehende Kurbelwelle 80 auf die geforderte Propellerdrehzahl.
Am Ende der Welle 83 ist ein Kegelrad 84 montiert.
Dieses Kegelrad 84 greift in ein zweites Kegelrad 85, welches auf der Welle 86 lose aufliegt und dadurch frei rotieren kann.
An diesem Kegelrad 85 befindet sich fest verbunden ein Nutsegment 87, das ebenfalls auf der Welle 86 frei rotieren kann. Die Welle 86 ist mit den Lagern 88 und 89 gelagert.
Das Nutsegment 90 ist mit der Welle 86 fest verbunden. Auf diesem Nutsegment 90 ist eine Nuthülse 91 aufgeschoben.
Diese Nuthülse 91 kann in Richtung Nutsegment 87 verschoben werden und umschließt dann beide Nutsegmente 87/90.
Das Drehmoment wird mit Hilfe der verschiebbaren Nuthülse 91 auf die Welle 86 übertragen, wenn diese durch verschieben eingekuppelt wird.

Die Nutenhülse 91 wird mit Hilfe der Kupplungsfeder 92 in Richtung Nutsegment 87 gedrückt. In die Nuthülse 91 ist eine Schleifnut eingearbeitet in die eine verschiebbare Schleifgabel 93 greift.
Diese Schleifgabel ist mit einer Führung Schleifgabel 94 versehen und mit dem O-Ring 96 im Gehäuse abgedichtet. An diese Führung Schleifgabel 94 ist ein Bautenzug 95 befestigt, der zu einem Bedienungshebel am Steuergestell des Teleskop- Flügel 49 führt.
Wird der Bautenzug 95 mit Hilfe des Bedienungshebel am Steuergestell des Teleskop- Flügel 49 auf Zug belastet, zieht dieser über die Führung Schleifgabel 94 die Schleifgabel 93 und damit die Nuthülse 91 von dem Nutsegment 87 herunter. Damit hat das Kegelrad 85 den Formschluß zur Welle 86 verloren und dreht sich jetzt frei auf der Welle 86. Dieses geht nur wenn der Motor nicht rotiert. Wird der Bedienungshebel am Steuergestell des Teleskop- Flügel 49 wieder entlastet, drückt die gespannte Kupplungsfeder 92 den gesamten Mechanismus samt Bautenzug 95 wieder in den eingekuppelten Zustand. Sollte der Bautenzug im Flugzustand reißen, bleibt die Welle 86 auf jeden Fall eingekuppelt. So ist sichergestellt, dass ein gerissener Bautenzug den Propellerantrieb nicht auskuppeln kann und es so nicht zu einer Notsituation kommt.

An der Welle 86 ist eine Gleichlaufgelenkwelle 97 (Abbildung 8) oder eine Kreuzgelenkwelle 101 (Abbildung 9) befestigt. Diese Gleichlaufgelenkwelle 97 ist auch als Halbwelle im PKW-Bau bekannt und treiben dort bei Frontantrieb die Räder an. Diese Gleichlaufgelenkwelle 97 bestehen aus einem Festgelenk 99, einem Verschiebegelenk 98, die beide eine Winkelveränderung ermöglichen, einem Wellenteil 97 und den mit Fett gefüllten Schutzmanschetten 100. Das Verschiebegelenk 98 kann zum Winkel auch noch einen Längenausgleich kompensieren. Das Verschiebegelenk 98 ist an die Welle 86 befestigt und wird von der mit Fett gefüllten Manschette 100 gegen Staub und Schmutz geschützt. Diese Gleichlaufgelenkwellen 97 haben den Vorteil, dass sie die Drehbewegung gleichförmig übertragen und nicht pulsierend (Kadanfehler), wie es bei Kreuzgelenkwellen 101 üblich ist. Die Gleichlaufgelenkwelle 97 und die Kreuzgelenkwelle 101 könnte auch durch eine Welle mit ein oder zwei Kegelradpaaren in den entsprechenden Winkeln ersetzt werden.

### Abbildung 10

Die Gleichlaufgelenkwelle 97 führt zum Heck des Ultraleicht- Fluggerät, wo sich das Gehäuse Riementrieb 102 befindet.
Im Gehäuse Riementrieb 102 ist die Gleichlaufgelenkwelle 97 mit dem Festgelenk 99 im Winkel an die Riemenscheibenwelle 103 befestigt und wird durch die mit Fett gefüllten Manschette 100 gegen Staub und Schmutz geschützt.

### Abbildung 11

Die Riemenscheibenwelle 103 ist mit zwei Lagern im Gehäuse Riemenantrieb 102 gelagert. Am oberen Teil des Gehäuse Riementrieb 102 ist die innere Propellerwelle 104 und die äußere Welle 105 mit zwei Hauptlagern gelagert Der Wellenabstand kann mit einer Verstellung verändert werden, so dass der Zahnriemen 106 oder ein Verbundkeiriemen 107 (Abbildung 13) oder ein Keilrippenriemen 108 (Abbildung 14) gespannt werden kann. An der äußeren Welle 105 ist eine Mehrscheiben- Trocken- Lamellenkupplung 109 angebracht.
Diese Mehrscheiben- Trocken- Lamellenkupplung 109 trennt die äußere Welle 105 von der inneren Propellerwelle 104. Die Kupplung ist mit einem elektrischen Schalter am Lenker zu bedienen. Die Betätigungskraft um die Kupplung zu trennen, wird durch einen 12 Volt Elektromagnet erzeugt. Im stromlosen Zustand ist die Kupplung immer im Eingriff. Die Kupplung wird benötigt um auf losem Untergrund ohne Propellerrotation zu starten (siehe Beschreibung Zeile 103 bis 115)

### Abbildung 10

Die innere Propellerwelle 104 ist in der Lagerung axial verschiebbar. Die Propellerwelle 104 stützt sich durch ein Axiallager 110 am Zellenrahmen 53 ab. An der inneren Propellerwelle 104 ist der Druckpropeller 111 befestigt. So wird die Kraft des Druckpropeller 111 direkt über das Axiallager 110 auf den Zellenrahmen 53 übertragen. Das Gehäuse Riementrieb 102 überträgt keine Schubkraft des Druckpropellers 111 und kann so entsprechend leichtgewichtig gebaut werden.

### Nummernübersicht:

- 11: Rahmen
- 12: Motor
- 13: Getriebe
- 14: Vorderrad
- 15: Oberer Querlenker
- 16: Unterer Querlenker
- 17: Zug- und Drucklenkstange
- 18: Kleiner Ausleger der Lenksäule
- 19: Lenksäule
- 20: Lenker
- 21: Gelenkköpfe (an den Enden des oberen und unteren Querlenkers)
- 22: Gelenkkopf (Zug- und Druckstange der Lenkstange)
- 23: Federelement
- 24: Stoßdämpfer
- 25: Handbremse (am Lenker)
- 26: Hinterradschwinge
- 27: Schwingenlager
- 28: Federelement
- 29: Stoßdämpfer
- 30: Bremsscheibe
- 31: Hydraulisch betätigte Bremszange
- 32: Fußbremse
- 33: Antriebswelle Hinterräder
- 34: Kettenrad
- 35: Antriebskette
- 36: Kettenritzel
- 37: Kupplungshandhebel (am Lenker)
- 38: Fußrasten
- 39: Gangwahlfußhebel
- 40: Kraftstofftank
- 41: Benzinhahn
- 42: Sitzbank
- 43: Auspuffanlage
- 44: Schalldämpfer
- 45: Kühler
- 46: Gasgriff
- 47: Schnellspannkupplung Lenker
- 48: Schnellspannkupplung Lenksäule
- 49: Steuergestell des Teleskop Flügel
- 50: Schnellspannkupplung Flügel
- 51: zentrale Hauptanbindung
- 52: Kabel, hydraulische Bremsleitung, Bautenzüge
- 53: Zellenrahmen
- 54: Rohrausleger
- 55: Fußauflage
- 56: Lagerbock
- 57: Drehwelle Rohrausleger
- 58: Auslegerplatte Fußlenkung
- 59: Kugelgelenkkopf
- 60: Zug-/ Druckstange
- 62: Teleskop- Flügel
- 63: Schnellspanner Flügelfixierung
- 64: Flügelrohrsegment
- 65: Hinteres Flügelkantenrohr
- 66: Bohrungen im Flügelsegment
- 67: Bohrungen im Teleskoprohr
- 68: Federspannbolzen
- 69: Feder
- 70: Flügelstauraumklappe rechts
- 71: Flügelstauraumklappe links
- 72: Stauraum
- 73: Bespannung Flügel rechts
- 74: Bespannung Flügel links
- 75: Reißverschluß
- 76: Steuergestell- Flügel- Teleskoprohre
- 77: Zylinder
- 78: Kolben
- 79: Pleul
- 80: Kurbelwelle
- 81: Zahnrad Kurbelwelle
- 82: Zahnrad Untersetzung
- 83: Welle
- 84: Kegelrad
- 85: Kegelrad (lose auf der Welle gleitgelagert)
- 86: Welle
- 87: Nutsegment (lose auf der Welle gleitgelagert)
- 88: Lager
- 89: Lager
- 90: Nutsegment (fest auf der Welle 86)
- 91: Nutenhülse
- 92: Kupplungsfeder
- 93: Schleifgabel (zur Verschiebung des Verschieberinges)
- 94: Führung Schleifgabel
- 95: Bautenzug
- 96: O-Ring
- 97: Gleichlaufgelenkwelle
- 98: Verschiebegelenk
- 99: Festgelenk
- 100: Schutzmanschette (mit Fett gefüllt)
- 101: Kreuzgelenkwelle
- 102: Gehäuse Riementrieb
- 103: Riemenscheibenwelle
- 104: Innere Propellerwelle
- 105: Äußere Welle
- 106: Zahnriemen
- 107: Verbundkeilriemen
- 108: Keilrippenriemen
- 109: Mehrscheiben- Trocken- Lamellenkupplung
- 110: Axiallager
- 111: Druckpropeller
- 112: Zahnriemenscheibe / Verbundkeilriemenscheibe / Keilrippenriemenscheibe
- 113: Antriebsrad

## Patentansprüche

1. Das Ultraleicht-Fluggerät mit folgenden Merkmalen :
a) Ein Rahmen (11), der einen luft- oder wassergekühlten Motor (12) mit einem oder mehreren Zylindern, mit einem manuell schaltbaren Getriebe mit Kupplung (13) oder Automatikgetriebe umschließt,
b) ein Zellenrahmen (53), der am Rahmen (11) befestigt ist, und zusammen somit die Ultraleicht-Fluggerät Gondel bildet,
c) eine zentrale Hauptanbindung (51) zur Befestigung eines Flügels (62), die am Zellenrahmen (53) befestigt ist,
d) ein für das schaltbare Getriebe benötigter Kupplungshebel (37) am Ende eines Lenkers (20) sowie ein Gangwahlfußhebel (39), der sich an der linken Seite vor Fußrasten (38) befindet,
e) ein Gasgriff (46), der sich am rechten Lenkerende (20) befindet,
f) ein Kraftstofftank (40) mit Sitzbank (42), der auf dem Rahmen (11) aufliegt,
g) zwei Vorderräder (14), die **durch** zwei obere Querlenker (15) und zwei untere Querlenker (16) sowie zwei Federelemente (23) und zwei Stoßdämpfer (24) sowie zwei Zug und Druck Lenkstangen (17) geführt werden, die wiederum an einem kleinen Ausleger der Lenksäule (18) mit dem Lenker (20) befestigt sind,
h) eine an jedem Vorderrad (14) befindliche Bremsscheibe und eine an jedem Vorderrad befindliche hydraulisch betätigte Scheibenbremszange sowie eine Handbremse (25), die sich am Lenker (20) befindet um die Bremse zu betätigen,
i) eine Hinterradschwinge (26), die in einen Schwingenlager (27) drehbar gelagert ist und durch ein Federelement (28) und einen Stoßdämpfer (29) eine Antriebswelle Hinterräder (33) und damit die beiden Antriebsräderräder (113) führt,
j) eine Bremsscheibe 30 und eine hydraulisch betätigte Bremszange (31), die durch eine Fußbremse (32) betätigt wird,
k) ein Kettenritzel (36), dass am Getriebeabgang des Getriebes (13), das gewandelte Drehmoment des Motors mittels einer Antriebskette (35) an das Kettenrad (34) und damit an die Antriebswelle Hinterräder (33) der beiden Antriebsräder (113) weiterleitet,
l) einer Auspuffanlage (43), die zum Heck des Ultraleicht- Fluggerätes führt an dem sich ein Schalldämpfer (44) zur Fluglärmreduzierung befindet,
m) das Drehmoment vom Motor wird direct von der Kurbelwelle (80) oder einer anderen rotierenden Welle vom Motor oder Getriebe über ein Winkelgetriebe (84/85) mit einer Kupplung (87/90/91/92/93/94/95), sowie eine Gleichlaufgelenkwelle (97) oder eine Kreuzgelenkwelle (101) parallel zum Ultraleicht- Fluggerät zum Heck geführt und dort an eine gelagerte Riemenscheibenwelle (103) mit einer darauf befestigten Zahnriemenscheibe (112) oder Keilriemenscheibe abgegeben, die einen Propeller (111) antreibt.

2. Das Ultraleicht Fluggerät nach Anspruch 1 ist **dadurch gekennzeichnet, dass** auf der Zahnriemenscheibe (112) oder Keilriemenscheibe ein Zahnriemen (106) oder Keilrippenriemen (107) oder ein Verbundkeilriemen (108) aufliegt, der das Drehmoment des Motors an eine im Abstand verstellbare zweite, oberhalb befindlichen Zahnriemenscheibe (112)oder Keilriemenscheibe weitergibt, die auf einer gelagerten äußeren Welle (105) befestigt ist und an deren Wellenende eine trennbare Mehrscheiben- Trocken- Lamellenkupplung (109) das Drehmoment an eine inneren Propellerwelle (104) mit Druckpropeller (111) weitergibt, die sich mittels eines Axiallagers (110) an dem Zellenrahmen (53) abstützt.

3. Das Ultraleicht Fluggerät nach Anspruch 1 ist durch folgende Merkmale **gekennzeichnet**,
a) einen beweglich befestigten Teleskop- Flügel (62), der an der zentralen Hauptanbindung (51) beweglich befestigt ist, und
durch Aluminiumplatten oder glasfaserverstärkte Kunststoffteile aerodynamisch geformt ist,
zwei obere oder zwei untere Flügelstauraumklappen (70/71) aufweist, die Stauräume (72) für die Flügelbespannung rechts und links (73/74) beinhalten,
sich durch das Auseinanderziehen von mehreren ineinanderschiebbaren Flügelrohrsegmenten (64) zu einem ausgezogene Flügelrohrgestell ausziehen läßt,
sich mit Hilfe von Federspannbolzen (68) und Federn (69) verriegeln läßt,
sich mit der Flügelbespannung rechts und links (73/74) überziehen läßt,
b) eine Flügelbespannung rechts und links (73/74), die sich durch einen Reißverschluß (75) am Teleskop-Flügel (62) anbinden läßt,
c) zwei herausziehbare Steuergestell Flügel Teleskoprohre (76), die aus dem Steuergestell des Teleskopflügels (62) ausgefahren werden und nach der Befestigung durch Bolzen den Flügel stabilisieren.

4. Das Ultraleicht Fluggerät nach Anspruch 1 ist **dadurch gekennzeichnet, dass** der Lenker (20) sich durch eine Schnellspannkupplung Lenker (47) von einer Schnellspannkupplung Lenksäule (48) entkuppeln läßt und sich an eine Schnellspannkupplung Flügel (50) angekuppeln läßt und umgekehrt, wobei durch die Art der Verlegung der Kabel, der hydraulischen Bremsleitung und der Bautenzüge (52) keine Behinderungen beim Fliegen sowie Fahren entsteht, und alle Bedienungselemente des Lenkers in beiden Betriebszuständen erhalten und funktionsfähig bleiben.

5. Das Ultraleicht Fluggerät nach Anspruch 1 ist durch folgende Merkmale **gekennzeichnet**,
a) einen Lagerbock (56), der am Rahmen (11) befestigt ist und eine Drehwelle Rohrausleger (57) drehbar lagert,
b) einen Rohrausleger (54), der an der Drehwelle Rohrausleger (57) befestigt ist und an dem sich an beiden Enden je eine Fußauflage (55) befindet,
c) eine Auslegerplatte Fußlenkung (58), die an der Drehwelle Rohrausleger (57) befestigt ist,
d) eine Zug-/Druckstange (60), die den Kugelgelenkkopf (59) und den Gelenkkopf außermittig am Rad (61) verbindet.

## Claims

1. An aerial vehicle with the following characteristics
a) a frame (11) which holds an air or liquid cooled engine (12) with one or more cylinders with a manual shifted gear including clutch (13) or automatically shifting gear,
b) a secondary frame (53) which is bolted onto the main frame (11) and is so forming the ultralight aircraft gondola.
c) a central main attachment (51) which connects the airfoil to the main frame gondola,
d) a clutch lever (37) for the manual shifting gearbox, which is attached motorcyclelike at the end of the handlebar (20), and a shifting lever(39) which is positioned bevore the left footrest (38) to be operated by the left foot,
e) a throttle (46) which is positioned ATV-like at the right end of the handlebars (20),
f) a fuel tank (40) with integrated seating bench (42) which is positioned on top of the main frame (11).
g) Two front wheels (14) which are guided by two upper steering arms (15) and two lower steering arms (16) and two independant shock absorbers (24) with two dampeners which connect the steering column (18) with the handle bar (20).
h) A hydraulic operated brake disk (14) on every front wheel with a manually operated lever (25) which is positioned on the handle bar,
i) A rear motorcycle-style rocker arm (26) which is pivoting around a horizontal axis (27) and is dampened by a shock absorber (29) and carrying the driving shaft and thereby providing transmission of power to the rear wheels (113),
j) A rear hydraulically operated disk brake with disk (30) and brake calipers (31) which is operated by the right foot,
k) A straight-toothed wheel (36) which transmits the power from the gear (13) to the rear axle by a chain (35) to drive the rear wheels (113),
l) A muffler kit (43), which is guiding the exhaust fumes into the direction of the rear end of the vehicle and carries a silencer (44) at its end,
m) The power and torque of the engine is transmitted from the crankshaft (80) or any other rotating shaft from the engine or the gear with an angular gear (84/85) and a clutch (87/90/91/92/93/94/95) and a shaft parallel to the rear end of the vehicle, The shaft transmits the power with a belt pulley (103/112) to drive the propeller (111),

2. The above mentioned aerial vehicle has the following additional characteristics:
the belt pulley (112) is connected with a v-belt (106) drive or a toothed belt (107) to another belt pulley (112) which is connected to a multiple disk clutch which provides power to the propeller (111) which is bolted onto the lateral frame (53)

3. The above mentioned aerial vehicle has the following additional characteristics.
a) It has an aerial wing which consists out of telescopic cylinders (62),
which pivots around the main attachment (51),
which is aerodynamically optimized by aluminium plates and reinforced glass fibre parts.
which carries integrated stowage compartments (72) with stowage compartment doors (70/71) which is used for the fabric skin of the left and right wing (73/74)
which can be telescopically extended and decreased by using telescopic cylinders and are secured by spring loaded (69) security bolts (68)
b) which is covered with the fabric skin (73/74) in the extended condition and is attached to the wing (62) by a zipper (75)
c) which has a steering frame (76) that is also telescopically attached to the main wing section (49) and which is giving additional strength to the wing (62) construction which is secured by spring loaded (69) safety pins (68)

4. The above mentioned aerial vehicle has the following additional characteristics The handlebars (20) can be unlocked from the steering column (48) with a quick fasten locking system which is identically on the other side of the wing bar (50), which has bowden cables (52) hydraulic brake lines and electric wiring which is fully operational no matter of being attached to the wing or to the vehicle.

5. The above mentioned aerial vehicle has the following additional characteristics
a) an additional foot steering system for the front wheels (14) which consists out of a secondary steering column (56)
b) which connects the steerable footrests (55)
c) via a linkage lever (58) to an steering arm
d) (60) which is connected to the right wheel (14)

## Revendications

1. Un aéronef ultra-léger avec les caractéristiques suivantes:
a) un cadre (11) supportant un moteur refroidi par air ou par eau (12) à un ou plusieurs cylindres, avec une boîte de vitesses à passage de rapports manuel et embrayage (13) ou une boîte automatique,
b) un cadre secondaire (53), rattaché au cadre (11). Les deux formant ainsi la gondole de l'appareil ultra-léger,
c) un raccordement principal central (51), fixé sur le cadre secondaire (53) pour permettre le raccordement d'une aile,
d) un levier d'embrayage (37) pour la boîte de vitesses, place au bout du guidon (20) ainsi qu'un sélecteur de vitesses (39), situé sur le côté gauche devant le repose-pied (38),
e) une poignée des gaz (46), placée sur le côté droit du guidon (20),
f) un réservoir à carburant (10) avec banquette (42), reposant sur le cadre (11),
g) deux roues avant (14), guidées par deux bras de suspension supérieurs (15) et deux bras inférieurs (16) de même que deux ressorts (23) et deux amortisseurs (24) et de même que deux biellettes de direction (17), qui sont elles-mêmes reliées au guidon (20) à travers la colonne de direction (18),
h) un disque de frein avec étrier hydraulique sur chaque roue avant (14) de même qu'un levier manuel (25), placé sur le guidon (20) pour l'utilisation des freins,
i) un bras oscillant arrière (26), pivotant autour de l'axe (27) et qui guide, à l'aide d'un ressort (28) et d'un amortisseur (29), l'axe arrière (33) et ainsi les deux roues motrices (113).
j) un disque de frein (30) et un étrier hydraulique (31) actionné à l'aide d'une pédale (32),
k) un pignon (36) en sortie de boîte de vitesses (13) qui transmet le couple moteur via une chaîne (35) au plateau (34) et ainsi à l'axe (33) des deux roues arrières motrices (113),
l) un système d'échappement (43) menant à l'arrière de l'appareil ultra-léger et équipe d'un silencieux (44) réduisant le niveau sonore de l'appareil,
m) le couple moteur est transmis directement par le vilebrequin (80) ou par un autre arbre du moteur ou de la boîte de vitesses à travers un renvoi d'angle (84/85) avec embrayage (87/90/91/92/93/91/95) ainsi qu'un arbre homocinétique (97)ou un arbre cardan (101) à l'arrière de l'appareil Cet arbre est parallèle à l'axe de l'appareil ultra-léger À l'arrière de l'appareil, il mène à l'arbre de poulie (103) sur lequel est fixée une poulie de courroie crantée (112) ou une poulie de courroie trapézoïdale qui entraîne l'hélice (111),

2. L'appareil volant ultra-léger comme défini ci-dessus est **caractérisé par le fait que** sur la poulie (112) est montée une courroie crantée (106) ou une courroie poly-V (107) ou courroie trapézoïdale jumelée (108) qui transmet le couple moteur à une deuxième poulie (112) réglable en entre-axe et située au dessus de la première, Cette deuxième poulie est montée sur l'arbre extérieur (105) qui transmet le couple via un embrayage sec multi-disques à l'arbre d'hélice (104) avec hélice (111). L'arbre d'hélice s'appuie sur le cadre secondaire (53) par un roulement axial (110)

3. L'appareil volant ultra-léger comme défini ci-dessus possède égalemment les caractéristiques suivantes :
a) une aile télescopique (62) rattachée au raccordement principal (51) de façon mobile et qui est moulée de façon aérodynamique à l'aide de plaques d'aluminium ou d'éléments en plastiques renforcés par des fibres de verre. Cette aile doit posséder des compartiments de stockage (72) avec clapet (70/71) pour le rangement des toiles des ailes droite et gauche (73/74), elle doit pouvoir être dépliée et refermée en bougeant de façon télescopique l'armature tubulaire (64), elle doit pouvoir être verrouillée à l'aide de boulons de sécurité (68) et de ressorts (69) l'aile doit pouvoir être recouverte par la toile à droite et à gauche (73/74).
b) La toile (73/74) doit être fixée à l'armature télescopique (72) par une fermeture à glissière (75).
c) Elle doit comporter deux tubes télescopiques (76) sortant du gouvernail (49) de l'aile télescopique (62) et stabilisant après avoir été fixés par des boulons de sécurité, l'aile dépliée.

4. L'appareil volant ultra-léger comme défini ci-dessus est **caractérisé par le fait que**, le guidon (20) peut être retiré rapidement grâce à son système d'attache (47) de sa fixation sur la colonne de direction (48) pour être monté par attache rapide (50) sur l'aile et inversement, sans que l'acheminement des fils électrique du tuyau de frein hydraulique et des câbles de commande (52) ne gênent ni la conduite ni le vol. tous les éléments de commande restent opérationnels dans les deux modes d'utilisation

5. L'appareil volant ultra-léger comme défini ci-dessus possède égalemment les caractéristiques suivantes:
a) un palier (56), fixé au cadre (11) une qui fixe l'axe de pivot (57) du dispositif secondaire de direction,
b) un dispositif secondaire de direction (54) qui est fixé sur le pivot (57) et de chaque côté duquel se trouve un repose-pied (55),
c) un bras de liaison (58), qui est fixé sur l'axe de pivot (57),
d) une biellette(60), qui relie l'embout rotulaire (59) et la rotule d'articulation de façon excentrée à la roue (61).
